# EUROPÄISCHE PATENTSCHRIFT

(11) **EP 4 704 123 B1**
(45) Veröffentlichungstag und Bekanntmachung des Hinweises auf die Patenterteilung: **07.10.2026**
(21) Anmeldenummer: 24196599.5
(22) Anmeldetag: 27.08.2024
(51) Int. Cl.: H01F 7/02, B64G 1/24

(54) **VORRICHTUNG UND VERFAHREN ZUR ERZEUGUNG UND STEUERUNG VON MAGNETFELDERN**
APPARATUS AND METHOD FOR GENERATING AND CONTROLLING MAGNETIC FIELDS
DISPOSITIF ET PROCÉDÉ DE GÉNÉRATION ET DE COMMANDE DE CHAMPS MAGNÉTIQUES

(43) Veröffentlichungstag der Anmeldung: 04.03.2026
(73) Patentinhaber: Universität Stuttgart, Körperschaft des öffentlichen Rechts, 70174 Stuttgart (DE)
(72) Erfinder: Ehresmann, Manfred, 70174 Stuttgart (DE); Fasoulas, Stefanos, 70174 Stuttgart (DE); Herdrich, Georg, 70174 Stuttgart (DE)
(74) Vertreter: RGTH

(56) Entgegenhaltungen:
- EP-B1- 3 904 220
- US-A1- 2018 078 780

## Beschreibung

Die vorliegende Erfindung betrifft eine Vorrichtung sowie ein Verfahren zur Erzeugung und Steuerung von Magnetfeldern als auch die Anwendung einer entsprechenden Vorrichtung zur Lageregelung in der Raumfahrt laut den unabhängigen Ansprüchen.

Im Stand der Technik gibt es bereits Lösungen zur Steuerung und Manipulation von Magnetfeldern, insbesondere in Bezug auf die Raumlage von Raumfahrzeugen. So können hierzu beispielsweise Permanentmagnete, Elektromagnete, Elektropermanentmagnete oder supraleitende Magnete eingesetzt werden.

Permanentmagnete können grundsätzlich schlecht gesteuert werden und vor allem nicht "deaktiviert" werden. Elektromagnete ermöglichen zwar eine präzise Steuerung von Magnetfeldern, erfordern jedoch eine kontinuierliche Energiezufuhr, um das Magnetfeld aufrecht zu erhalten. Elektropermanentmagneten weisen zwar eine im Vergleich zu Elektromagneten verbesserte Energieeffizienz auf, können allerdings aufgrund der Umschaltung und Stabilisierung des Magnetfeldes hinsichtlich der Herstellung komplexer sein. Supraleitende Magnete erzeugen starke und stabile Magnetfelder, erfordern jedoch sehr niedrige Temperaturen und spezielle Materialien, um die Supraleitfähigkeit zu ermöglichen. Dies begrenzt ihre Anwendungsmöglichkeiten und macht sie in vielen Fällen zu kostenintensiv und kompliziert.

US 2018/078780 A1 beschreibt ein tragbares Gerät, um transkraniale magnetische Stimulationen in Patienten, die eine Gehirnverletzung aufweisen, auszulösen.

EP 3 904 220 B1 beschreibt eine Vorrichtung zur Lageregelung von Raumfahrzeugen.

Der vorliegenden Erfindung liegt die Aufgabe zugrunde, eine Vorrichtung zur Erzeugung von Magnetfeldern derart weiterzuentwickeln, dass die oben genannten Nachteile überwunden werden. Im Speziellen soll die Vorrichtung eine effiziente, präzise und energieeffiziente Möglichkeit zur Erzeugung und Steuerung von Magnetfeldern ermöglichen.

Gelöst wird die vorgenannte Aufgabe durch eine Vorrichtung zur Erzeugung und Steuerung von Magnetfeldern nach Anspruch 1, die mindestens zwei Permanentmagneten umfasst. Jeder Permanentmagnet erzeugt dabei ein Teilmagnetfeld. Die Permanentmagneten sind jeweils beweglich, vor allem drehbar, gelagert, sodass jeder Permanentmagnet in mindestens zwei, insbesondere genau zwei, Positionen gebracht werden kann. Somit kann die Vorrichtung mindestens drei verschiedene Magnetfeldzustände als Überlagerung der Teilmagnetfelder erzeugen.

Die Permanentmagnete können als Neodym Magnete ausgebildet sein. Bei den Positionen handelt es sich um stabile Positionen, dies bedeutet, dass der Permanentmagnet in der jeweiligen Position verbleibt, ohne dass eine Zufuhr von Energie notwendig ist. Bei den erzeugten, mindestens drei verschiedenen Magnetfeldzuständen handelt es sich somit auch um stabile Magnetfeldzustände, die ohne die Zufuhr von Energie erhalten bleiben. Nur für den Umschaltprozess zwischen verschiedenen Magnetfeldzuständen wird Energie benötigt.

Die drei verschiedenen erzeugten Magnetfeldzustände werden durch eine Überlagerung der Teilmagnetfelder gebildet. Die Anordnung der Permanentmagneten bestimmt somit den Magnetfeldzustand. Jeder Permanentmagnet weist einen positiven und einen negativen Teil auf.

Eine erste Anordnung kann einen ersten Magnetfeldzustand erzeugen. Dieser Zustand wird hier beispielhaft positiv genannt. Der positive Teil beider Permanentmagneten zeigt in eine erste Richtung.

Zeigt der positive Teil der Permanentmagneten in die entgegengesetzte Richtung, die zweite Richtung, liegt eine zweite Anordnung und somit der zweite Magnetfeldzustand vor, der hier beispielhaft negativ genannt wird.

Zeigen die Permanentmagnete, bzw. deren positive Teile, in unterschiedliche Richtungen wird ein neutraler Magnetfeldzustand hergestellt. Bei diesem Magnetfeldzustand kompensieren sich die Teilmagnetfelder der Magnetfelder so, dass das Gesamtmagnetfeld Null beträgt. Dies ist somit eine effiziente Möglichkeit, die Vorrichtung auszuschalten, um somit beispielsweise negative Störeffekte, die das permanente Magnetfeld eines Permanentmagneten erzeugen können, zu vermeiden.

Insgesamt wird somit ein tristabiles System vorgeschlagen, mit dem drei stabile Magnetfeldzustände energieeffizient erzeugt werden können. Die Vorrichtung benötigt keine kontinuierliche Energiezufuhr für das "Halten" der Magnetfeldzustände. Nur für das Umschalten wird Energie gebraucht. Die Vorrichtung präsentiert vor allem für Anwendungen, in denen Energieeffizienz und Batterielebensdauer wichtig ist, einen enormen Vorteil.

Insbesondere sind die Permanentmagneten magnetisch drehbar gelagert, um sie somit in die verschiedenen Positionen zu bringen. Vorzugsweise ist dies über eine Ferrofluidlagerung realisiert. Die Permanentmagneten können jeweils in einem Ferrofluid schwebend gelagert sein. Jeder einzelne Magnet ist somit vollumfänglich von Ferrofluid umgeben. Die magnetischen Nanopartikel im Ferrofluid streben zu den magnetischen Polen und bilden somit ein Kissen aus, welches einen eigenen Druck besitzt, und zwar den magnetischen Druck der Flüssigkeit. Dieser Druck sorgt dafür, dass andere Stoffe, die nicht magnetisch sind, weggedrückt werden und verhindert somit einen physischen Kontakt. Es entsteht eine sehr gering reibende Oberfläche, da nur Öloberfläche im Kontakt ist. Diese Art der Lagerung und Umschaltung ist vor allem eine besonders verschleißarme, zuverlässige und langlebige Lösung.

Lediglich für den Umschaltvorgang, das heißt die Änderung der Orientierung der Permanentmagneten wird Energie benötigt. Die Permanentmagneten weisen jeweils zwei Längsenden auf. An beiden Längsende eines Permanentmagneten ist in den mindestens zwei stabilen Zuständen jeweils eine jeweilige Spule angeordnet. Die Spulen sind erfindungsgemäß bestrombar. Über die jeweilige Spule sind beide Permanentmagneten erfindungsgemäß mit einem gemeinsamen magnetischen Jochbein auf der entsprechenden Seite verbunden. Somit sind die Permanentmagneten mit zwei Jochbeinen verbunden. Die Vorrichtung weist an jedem Längsende der Permanentmagneten eine jeweilige bestrombare Spule auf.

Die Spulen dienen erfindungsgemäß dazu, lokal ein Magnetfeld zu erzeugen und die Permanentmagneten in eine neue stabile Position zu versetzen. Die Position der Spulen ist dabei konstant, während sich der Magnet bewegt. Bspw. kann ein Permanentmagnet in einer ersten stabilen Position mit dem positiven Teil bei einer ersten Spule angeordnet sein und mit dem negativen Teil bei der zweiten Spule. Wechselt der Permanentmagnet von der ersten Position in die zweite Position ist nun der positive Teil mit der zweiten Spule in Kontakt, während der negative Teil bei der ersten Spule angeordnet ist.

Die mindestens zwei Jochbeine sind erforderlich, um die Teilmagnetfelder der Permanentmagneten im magnetisch neutralen Zustand kurzzuschließen und in den anderen Zuständen als konstantes externes Magnetfeld zu konzentrieren. Sie dienen somit zur Überlagerung der Teilmagnetfelder der Permanentmagneten.

Alternativ können die Permanentmagneten mechanisch drehbar gelagert sein.

Gemäss einer nichterfindungsgemässen Alternative kann diese Lagerung über mindestens einen Motor, vorzugsweise einen Elektromotor oder einen Servomotor in selbsthemmender Konfiguration erfolgen. Bspw. kann jedem Permanentmagneten ein Motor zugeordnet sein, der dazu ausgebildet ist, den Permanentmagnet in eine andere Position zu bringen.

Die mindestens zwei Permanentmagneten sind vor allen Dingen identisch ausgebildet. Sie weisen vor allem eine identische Geometrie und/oder identische Oberflächenmagnetisierung und/oder identisches magnetisches Dipolmoment auf.

Die Vorrichtung kann insbesondere mehr als zwei Permanentmagneten umfassen, wobei die Permanentmagneten nebeneinander in einer Raumrichtung angeordnet sein können. Die Permanentmagneten erstrecken sich somit eindimensional in einer Raumrichtung und sind somit an einem jeweiligen Längsende über Spulen mit einem gemeinsamen Jochbein verbunden und an dem anderen Längsende ebenfalls über Spulen mit einem gemeinsamen Jochbein. Die Kombination von mindestens zwei, bspw. zwei, drei oder vier, Permanentmagneten mit Spulen und zwei Jochbeinen kann als Magneteinheit verstanden werden. Vorzugsweise sind immer doppelt so viele Spulen vorhanden wie Permanentmagnete. Vorzugsweise handelt es sich bei der Vorrichtung um einen Gesamtmagneten mit einem variablen Magnetfeld, die mehrerer solcher Einheiten umfassen kann.

Bei mehr als zwei Permanentmagneten sind mehr als drei Magnetfeldzustände möglich. Es ist somit insgesamt eine feinere Einstellung der Stärke des erzeugten Magnetfeldzustände und somit größere Effekte, beispielsweise größere Magnetfelder, im Vergleich zu einer Einheit aus nur zwei Permanentmagneten möglich.

Alternativ kann die Vorrichtung mehrere Magneteinheiten (mit eigenen Jochbeinen) linear in einer Raumrichtung nebeneinander angeordnet umfassen. Auch in einem solchen Fall werden die oben genannten Vorteile der feineren Einstellbarkeit und größeren Effekten gegeben.

Ferner kann die Vorrichtung mehr als zwei Permanentmagnete umfassen, wobei die Permanentmagnete in einer zweidimensionalen Anordnung angeordnet sind. Das heißt, dass jeweils mindestens zwei Permanentmagnete in mindestens zwei Raumrichtungen angeordnet sind, wobei die Raumrichtungen nicht parallel zueinander sind. Vorzugsweise sind die Raumrichtungen senkrecht zueinander. Während somit mindestens zwei Permanentmagneten in einer Raumebene liegen, liegen mindestens zwei Permanentmagnete aller Permanentmagnete ebenfalls in einer gemeinsamen zweiten Raumebene.

Am meisten bevorzugt weist die Vorrichtung mehr als drei Magneteinheiten auf, die in einer zweidimensionalen Anordnung sind. Es können mindestens zwei Einheiten in einer ersten Raumrichtung und mindestens zwei Einheiten in einer zweiten, vorzugsweise senkrechten, Raumrichtung nebeneinander angeordnet sein. Dies ist eine Erweiterung in zwei lineare Raumrichtungen, die eine Erzeugung von Magnetfeldern in zweidimensionaler Form in der von beiden Raumrichtungen gebildeten Ebene erlaubt. Die Winkelauflösung kann durch die Anzahl der genutzten Einheiten definiert sein.

Ferner kann die Vorrichtung mehr als zwei Permanentmagnete umfasst, wobei die Permanentmagnete in einer dreidimensionalen Anordnung angeordnet sind. Sie sind derart angeordnet, dass jeweils mindestens zwei Permanentmagnete in mindestens zwei Raumebenen angeordnet sind. Am meisten bevorzugt weist die Vorrichtung mehr als drei Magneteinheiten auf, die in einer dreidimensionalen Anordnung sind. Es können mindestens zwei Einheiten in einer ersten Raumrichtung und mindestens zwei Einheiten in einer zweiten, vorzugsweise senkrechten, Raumrichtung und mindestens zwei Einheiten in einer dritten Raumrichtung, die vorzugsweise senkrecht zur ersten und zweiten Raumrichtung ist, nebeneinander angeordnet sind. Es können somit in allen drei Raumrichtungen beliebig diskrete Magnetfelder erzeugt werden. Diese Erweiterung in die dritte Raumrichtung ermöglicht die Erzeugung eines beliebigen 3D-Magnetfeldvektors.

Die Vorrichtung weist ferner eine Steuereinheit auf, um die Ströme der Spulen zu steuern. Insbesondere ist unter der Vorrichtung ein Magnettorquer zu verstehen.

Insbesondere bezieht sich die Erfindung ferner auf eine Anwendung einer oben beschriebenen Vorrichtung zur Lageregelung im Weltall, in anderen Worten um die die Raumfahrzeuglageregelung eines Raumschiffes im Orbit, und zwar Orbits, bei denen externe Magnetfelder vorliegen. Das wären vor allem der niedrige und mittlere Erdorbit und ferner Orbits hinsichtlich Planeten wie die Gasriesen und Merkur. Die erzeugten Magnetfelder werden möglichst effizient gesteuert. Es wird eine präzise Steuerung von Magnetfeldern durch eine Umschaltung zwischen den drei stabilen Zuständen ermöglicht. Dies erlaubt in Bezug auf die Ausrichtung von Raumfahrzeugen im Orbit eine möglichst energieeffiziente Steuerung, da keine kontinuierliche Energiezufuhr benötigt wird, um das Magnetfeld aufrecht zu erhalten. Lediglich für den Umschaltvorgang benötigt die Vorrichtung Energie. Das System kann somit die Ausrichtung eines Raumfahrzeuges im Orbit kontrollieren und zu stabilisieren, ohne dauerhaft Energie zu verbrauchen.

Ferner treten durch die vorliegende Vorrichtung bei der Anwendung in der Raumfahrt keine Störeffekte auf, wie dies beispielsweise im Fall von magnetischen Systemen der Fall ist, da der neutrale Magnetfeldzustand eingeschaltet und vor allem vollständig ausgeschaltet werden kann. Vor allem Permanentmagneten erzeugen ansonsten kontinuierliche unveränderliche Magnetfelder erzeugen, die unerwünschte Störungen verursachen können.

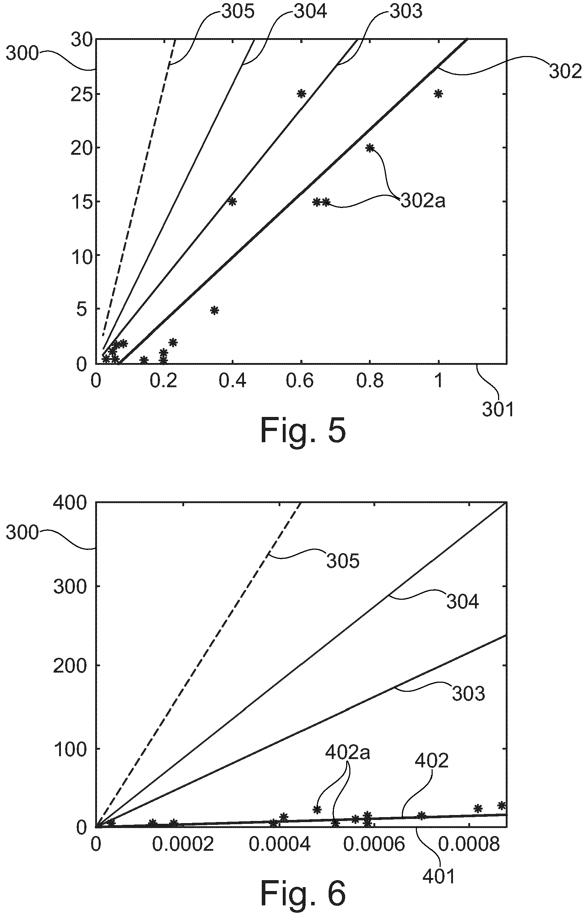

Ferner wird eine herausragende Systemeffektivität geschaffen. In der Raumfahrt sind Leichtbauanforderungen von hoher Bedeutung. Dabei steigert die Vorrichtung die Systemeffektivität deutlich im Vergleich zu Magnettorquern aus dem Stand der Technik. Diese Erhöhung der Systemeffektivität beträgt über 120 % und wird in Figur 5 dargestellt.

Auch wird die Systemkompaktheit erhöht, die insbesondere in der Raumfahrt von großer Relevanz ist. Es wird eine Steigerung der Systemkompaktheit um den Faktor 20 realisiert. Dies wird in Figur 6 dargestellt.

Insgesamt wird somit eine wesentlich verbesserte Alternative zu den herkömmlichen Magnettorquern ermöglicht, die die Leistung und Zuverlässigkeit von Raumfahrtmissionen verbessert. Auch bedeutet die vorliegende Erfindung einen bedeutenden Fortschritt in Bezug auf den Leichtbau, die Energieeffizienz und die Kompaktheit im Vergleich zum Stand der Technik dar.

Neben der Anwendung in der Raumfahrt sind verschiedene andere Anwendungen möglich, beispielsweise zur präzisen Erzeugung und Steuerung von Magnetfeldern, beispielsweise in der Medizintechnik, dem Umweltschutz, der Robotik oder der wirtschaftlichen Forschung. Auch in Bezug auf Magnetschlösser, magnetische Verriegelungen, einstellbare Haftmagneten, magnetische Schaltungen, beispielsweise das mechanische Relais, und Elektromotoren sind Einsatzmöglichkeiten gegeben.

In einem weiteren Aspekt bezieht sich die Erfindung auf ein Verfahren zur Erzeugung und Steuerung von Magnetfeldern gemäß Anspruch 10, wobei das Verfahren eine oben beschriebene Vorrichtung verwendet. Das Verfahrens umfasst ein Anordnen mindestens eines von mindestens zwei beweglich gelagerten Permanentmagneten in mindestens eine von zwei Positionen. Jeder Permanentmagnet erzeugt ein Teilmagnetfeld, sodass einer von mindestens drei verschiedenen Magnetfeldzuständen als Überlagerung der Teilmagnetfelder erzeugt wird. Dabei muss für das Halten der Magnetfeldzustände keine Energie aufgewandt werden. Lediglich für das Umschalten.

Es zeigen in rein schematischer Darstellung:
- Figur 1:: eine Draufsicht auf eine Vorrichtung zur Erzeugung und Steuerung von Magnetfeldern;
- Figur 2:: eine weitere Draufsicht auf die Vorrichtung nach Figur 1;
- Figur 3:: eine weitere Draufsicht auf die Vorrichtung nach Figuren 1 und 2;
- Figur 4:: ein Verfahrensschema eines Verfahrens zur Erzeugung und Steuerung von Magnetfeldern;
- Figur 5:: den magnetischen Moment aufgetragen gegenüber der Masse;
- Figur 6:: den magnetischen Moment aufgetragen gegenüber dem Volumen;
- Figur 7:: eine weitere Vorrichtung zur Erzeugung und Steuerung von Magnetfeldern;
- Figur 8:: eine Vorrichtung in zweidimensionaler Ausbildung; und
- Figur 9:: eine Vorrichtung in dreidimensionaler Anordnung.

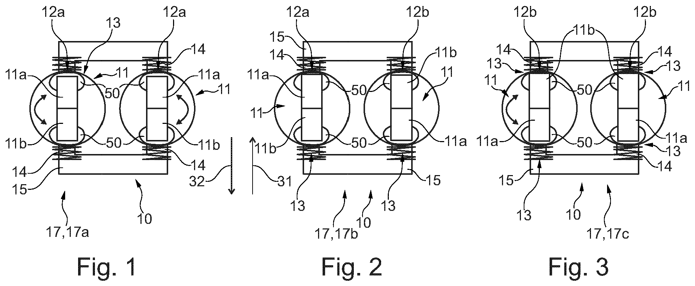

Figur 1 zeigt eine Vorrichtung 10 zur Erzeugung und Steuerung von Magnetfeldern in Draufsicht, die zwei Permanentmagneten 11 umfasst. Die Permanentmagneten 11 weisen einen positiven Teil 11a und einen negativen Teil 11b auf. An den Längsenden 13 sind Spulen 14 angeordnet, und an jeder Seite ein gemeinsames Jochbein 15.

In Figur 1 ist die Vorrichtung 10 derart gezeigt, dass die Permanentmagneten 11 beide mit ihrem positiven Teil 11a in eine erste Richtung 31 nach oben zeigen. Beide Permanentmagneten 11 sind somit an einer ersten Position 12a gezeigt. Die Teilmagnetfelder überlagern sich und es wird ein positiver Magnetfeldzustand 17a erzeugt. Deutlich ist eine Ferrofluidlagerung 50 dargestellt, die die Bewegung der Permanentmagnete 11 erlaubt. Auch ist mit einem Pfeil die Drehrichtung einer der Permanentmagnete 11 gezeigt und eine Umrandung der Magnete zeigt deren Bewegungsverlauf bei einem Umschalten in die andere Position.

In Figur 2 ist dieselbe Vorrichtung 10 der Figur 1 zu sehen. Der in Figur 2 links dargestellte Permanentmagnet 11 ist in der ersten Position 12a verblieben, während der rechts dargestellte Permanentmagnet 11 nun in einer zweiten Position 12b befindet. Sein positiver Teil zeigt nun in die zweite Richtung 32.

Die Teilmagnetfelder gleichen sich aus, sodass ein neutraler Magnetfeldzustand 17b hervorgerufen wird.

In Figur 3 ist ebenfalls die Vorrichtung 10 nach den Figuren 1 und 2 gezeigt, wobei nun beide Permanentmagneten 11 in einer zweiten Position 12b sind. Das heißt, ihre positiven Teile 11a zeigen jeweils nach unten in die zweite Richtung 32, während die negativen Teile 11b nach oben in die ersten Richtung 31 zeigen. Es wird insgesamt ein negativer Magnetfeldzustand 17c erzeugt.

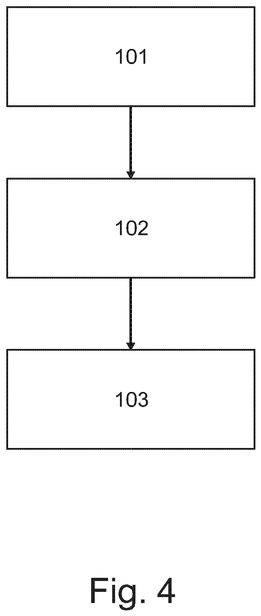

Figur 4 zeigt ein Verfahrensschema eines Verfahrens 100 zur Erzeugung und Steuerung von Magnetfeldern, das eine nach den Figuren 1 bis 3 gezeigte Vorrichtung verwendet 101. Es wird mindestens einer von mindestens zwei beweglich gelagerten Permanentmagneten bewegt 102, und zwar in mindestens eine von zwei Positionen. Dabei wird einer von drei verschiedenen Magnetfeldzuständen als Überlagerung der Teilmagnetfelder der Permanentmagnetfelder erzeugt 103.

In Figur 5 sind verschiedene Graphen hinsichtlich des magnetischen Momentes 300 in Bezug auf die Masse 301 gezeigt. Das magnetische Moment 300 ist in Am² und die Masse in kg angegeben. Deutlich sind Datenpunkte 302a, aus denen sich der erste Graph 302 ergibt, zu sehen. Diese beziehen sich auf konventionelle Systeme mit entsprechenden Magnettorquern aus dem Stand der Technik. Ein zweiter Graph 303 bezieht sich auf Elektropermanentmagnete im Idealfall. Die vorliegende Erfindung wird durch den dritten Graphen 304 spezifiziert. Ein vierter Graph 305 zeigt das theoretische Maximum des Verhältnisses zwischen dem magnetischen Moment 300 und der Masse 301. Deutlich ist zu sehen, dass die vorliegende Erfindung deutlich näher an dem Maximum und somit dem vierten Graph 305 liegt als die aus dem Stand der Technik bekannten Lösungen, was enorme massenspezifische Vorteile mit sich bringt.

In Figur 6 ist der magnetische Moment 300 gegenüber dem Volumen 401 dargestellt. Der magnetische Moment 300 wird in Am² und das Volumen 401 in m³ dargestellt. Es sind erneut die Datenpunkte 402a eines ersten Graphens 402 zu sehen. Dieser bezieht sich auf einen aus dem Stand der Technik bekannten Magnettorquer. Es ist ein zweiter Graph 403 zu sehen, der sich im Idealfall in Bezug auf Elektropermanentmagnete bezieht, und ein dritter Graph 404, der sich auf die vorliegende Erfindung bezieht. Ein vierter Graph 405 zeigt das theoretische Maximum. Erneut ist zu sehen, wie der dritte Graph 404 deutlich näher an dem theoretischen Maximum liegt als Lösungen, die aus dem Stand der Technik bekannt sind.

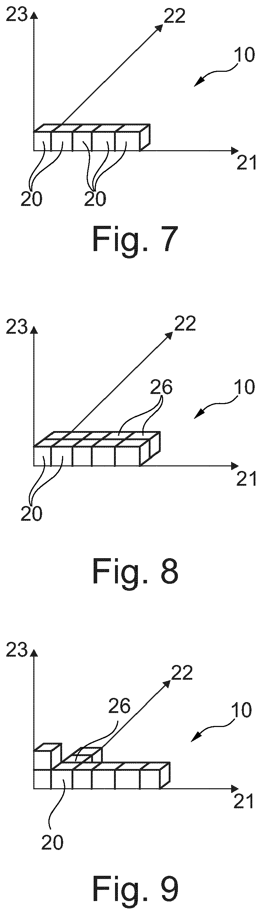

Figur 7 stellt eine weitere Vorrichtung 10 dar. Es ist ein kartesisches Koordinatensystem mit einer ersten Raumrichtung 21, einer zweiten Raumrichtung 22 und einer dritten Raumrichtung 23 gezeigt. Zwei

Permanentmagneten nach den Figuren 1 bis 3 können eine Magneteinheit 20 bilden. Es sind mehrere Magneteinheiten 20 in erster Raumrichtung 21 angereiht. Figur 8 zeigt eine Vorrichtung 10 in zweidimensionaler Ausbildung. Es sind Magneteinheiten 20 in erster Raumrichtung 21 und in zweiter Raumrichtung 22 angeordnet. Es können somit Magnetfeldern in der von der ersten Raumrichtung 21 und der zweiten Raumrichtung 22 gebildeten Ebene erzeugt werden.

Figur 9 zeigt eine Vorrichtung 10 in dreidimensionaler Ausbildung. Deutlich ist zu sehen, wie Magneteinheiten 20 in erster Raumrichtung 21, zweiter Raumrichtung 22 und dritter Raumrichtung 23 angeordnet sind. Somit können somit Magnetfeldern mit sämtlichen Richtungsvektoren erzeugt und gesteuert werden.

### Bezugszeichenliste

- 10: Vorrichtung zur Erzeugung und Steuerung von Magnetfeldern
- 11: Permanentmagnet
- 11a: positiver Teil
- 11b: negativer Teil
- 12a: erste Position
- 12b: zweite Position
- 13: Längsende
- 14: Spule
- 15: Jochbein

- 17: Magnetfeldzustand
- 17a: positiver Magnetfeldzustand
- 17b: neutraler Magnetfeldzustand
- 17c: negativer Magnetfeldzustand

- 20: Magneteinheit

- 21: erste Raumrichtung
- 22: zweite Raumrichtung
- 23: dritte Raumrichtung

- 31: erste Richtung
- 32: zweite Richtung

- 50: Ferrofluidlagerung

- 100: Verfahren zur Erzeugung und Steuerung von Magnetfeldern
- 101: Verwenden einer Vorrichtung
- 102: Bewegen mindestens einen von mindestens zwei beweglich gelagerten Permanentmagneten in mindestens eine von zwei Positionen
- 103: Erzeugen eines von mindestens drei verschiedenen Magnetfeldzuständen als Überlagerung der Teilmagnetfelder der Permanentmagnetfelder

- 300: Magnetisches Moment
- 301: Masse
- 302: erster Graph
- 302a: Datenpunkt des ersten Graphens
- 303: zweiter Graph
- 304: dritter Graph
- 305: vierter Graph

- 401: Volumen
- 402: erster Graph
- 402a: Datenpunkt des ersten Graphens
- 403: zweiter Graph
- 404: dritter Graph
- 405: vierter Graph

## Patentansprüche

1. Vorrichtung (10) zur Erzeugung und Steuerung von Magnetfeldern, wobei
die Vorrichtung (10) mindestens zwei Permanentmagneten (11) umfasst, wobei jeder Permanentmagnet (11) ein Teilmagnetfeld erzeugt, wobei die Permanentmagneten (11) jeweils beweglich gelagert sind, sodass jeder Permanentmagnet (11) in mindestens zwei Positionen gebracht werden kann und die Vorrichtung (10) dazu ausgebildet ist mindestens drei verschiedene Magnetfeldzustände (17) als Überlagerung der Teilmagnetfelder zu erzeugen,
**dadurch gekennzeichnet, dass**
in den mindestens zwei Positionen an jedem Längsende (13) der Permanentmagneten (11) eine jeweilige bestrombare Spule (14) der Vorrichtung angeordnet ist, um lokal ein Magnetfeld zu erzeugen und die Permanentmagneten in eine neue stabile Position zu versetzen, wobei die Permanentmagneten (11) über die Spulen (14) mit zwei gemeinsamen magnetischen Jochbeinen (15) der Vorrichtung verbunden sind.

2. Vorrichtung (10) nach Anspruch 1,
**dadurch gekennzeichnet, dass**
die Permanentmagneten (11) magnetisch drehbar gelagert sind.

3. Vorrichtung (10) nach Anspruch 2,
**dadurch gekennzeichnet, dass**
die Permanentmagneten (11) über eine Ferrofluidlagerung gelagert sind.

4. Vorrichtung (10) nach Anspruch 1,
**dadurch gekennzeichnet, dass**
die Permanentmagneten (11) mechanisch drehbar gelagert sind.

5. Vorrichtung (10) nach einem der vorangehenden Ansprüche,
**dadurch gekennzeichnet, dass**
die mindestens zwei Permanentmagnete (11) identisch ausgebildet sind.

6. Vorrichtung (10) nach einem der vorangehenden Ansprüche,
**dadurch gekennzeichnet, dass**
die Vorrichtung (10) mehr als zwei Permanentmagnete (11) umfasst, wobei sämtliche Permanentmagnete (11) nebeneinander in einer ersten Raumrichtung (21) angeordnet sind.

7. Vorrichtung (10) nach einem der vorangehenden Ansprüche,
**dadurch gekennzeichnet, dass**
die Vorrichtung (10) mehr als zwei Permanentmagnete (11) umfasst, wobei die Permanentmagnete (11) in einer zweidimensionalen Anordnung angeordnet sind.

8. Vorrichtung (10) nach einem der Ansprüche 1, 5, 6 oder 7,
**dadurch gekennzeichnet, dass**
mindestens zwei genannte Permanentmagnete (11) mit bestrombaren Spulen (14) und zwei Jochbeinen (15) eine Magneteinheit (20) darstellen, wobei die Spulen (14) dazu dienen lokal ein Magnetfeld zu erzeugen und die Permanentmagneten in eine neue stabile Position zu versetzen, wobei die Vorrichtung (11) mehr als zwei Magneteinheiten (20) umfasst.

9. Vorrichtung (10) nach Anspruch 8,
**dadurch gekennzeichnet, dass**
die Vorrichtung (10) mindestens drei Magneteinheiten (20) in einer zweidimensionalen Anordnung umfasst.

10. Vorrichtung (10) nach Anspruch 8,
**dadurch gekennzeichnet, dass**
die Vorrichtung (10) mindestens vier Magneteinheiten (20) in einer dreidimensionalen Anordnung umfasst.

11. Verfahren (100) zur Erzeugung und Steuerung von Magnetfeldern, **dadurch gekennzeichnet, dass**
das Verfahren (100) eine Vorrichtung (10) nach einem der Ansprüche 1 bis 10 verwendet,
wobei das Verfahren (100) ein Bewegen (102) mindestens eines von mindestens zwei beweglich gelagerten Permanentmagneten (11) in mindestens eine von zwei Positionen umfasst,
wobei jeder Permanentmagnet (11) ein Teilmagnetfeld erzeugt, sodass ein von mindestens drei verschiedenen Magnetfeldzuständen (17) als Überlagerung der Teilmagnetfelder erzeugt wird (103).

## Claims

1. Device (10) for generating and controlling magnetic fields,
wherein
the device (10) comprises at least two permanent magnets (11), wherein each permanent magnet (11) generates a partial magnetic field, wherein the permanent magnets (11) are each mounted so as to be movable, such that each permanent magnet (11) can be moved into at least two positions, and the device (10) is configured to generate at least three different magnetic field states (17) as a superposition of the partial magnetic fields, **characterized in that**
in the at least two positions, a respective coil (14) of the device that can be powered is arranged at each longitudinal end (13) of the permanent magnets (11), to generate a local magnetic field and to move the permanent magnets into a new stable position ,
wherein the permanent magnets (11) are connected via the coils (14) with two common magnetic yoke legs (15) of the device.

2. Device (10) according to claim 1,
**characterized in that**
the permanent magnets (11) are mounted so as to be magnetically rotatable.

3. Device (10) according to claim 2,
**characterized in that**
the permanent magnets (11) are mounted via a ferrofluid bearing.

4. Apparatus (10) according to claim 1,
**characterized in that**
the permanent magnets (11) are mounted so as to be mechanically rotatable.

5. Device (10) according to one of the preceding claims,
**characterized in that**
the at least two permanent magnets (11) are identically formed.

6. Device (10) according to one of the preceding claims,
**characterized in that**
the device (10) comprises more than two permanent magnets (11), wherein all permanent magnets (11) are arranged side by side in a first spatial direction (21).

7. Device (10) according to one of the preceding claims,
**characterized in that**
the device (10) comprises more than two permanent magnets (11), wherein the permanent magnets (11) are arranged in a two-dimensional arrangement.

8. Device (10) according to one of claims 1, 5, 6, or 7,
**characterized in that**
at least two of said permanent magnets (11) with coils (14) that can be powered and two yoke legs (15) form a magnetic unit (20), wherein the coils (14) serve to generate a local magnetic field and to move the permanent magnets into a new stable position,
wherein the device (11) comprises more than two magnetic units (20).

9. Device (10) according to claim 8,
**characterized in that**
the device (10) comprises at least three magnetic units (20) in a two-dimensional arrangement.

10. Device (10) according to claim 8,
**characterized in that**
the device (10) comprises at least four magnetic units (20) in a three-dimensional arrangement.

11. Method (100) for generating and controlling magnetic fields, **characterized in that**
the method (100) uses a device (10) according to one of claims 1 to 10,
wherein the method (100) comprises moving (102) at least one of at least two movably mounted permanent magnets (11) to at least one of two positions, wherein each permanent magnet (11) generates a partial magnetic field, such that one of at least three different magnetic field states (17) is generated (103) as a superposition of the partial magnetic fields.

## Revendications

1. Dispositif (10) destiné à générer et à commander des champs magnétiques,
dans lequel
le dispositif (10) comprend au moins deux aimants permanents (11), chaque aimant permanent (11) générant un champ magnétique partiel, les aimants permanents (11) étant chacun montés de manière mobile, de sorte que chaque aimant permanent (11) puisse être amené dans au moins deux positions et que le dispositif (10) soit conçu pour générer au moins trois états de champ magnétique différents (17) par superposition des champs magnétiques partiels,
**caractérisé en ce que**
dans les au moins deux positions, une bobine (14) du dispositif pouvant être alimentée en courant est disposée à chaque extrémité longitudinale (13) des aimants permanents (11), afin de générer localement un champ magnétique et de déplacer les aimants permanents vers une nouvelle position stable ,
les aimants permanents (11) étant reliés, par l'intermédiaire des bobines (14), à deux branches de culasse magnétiques communes (15) du dispositif.

2. Dispositif (10) selon la revendication 1,
**caractérisé en ce que**
les aimants permanents (11) sont montés de manière à pouvoir tourner magnétiquement.

3. Dispositif (10) selon la revendication 2,
**caractérisé en ce que**
les aimants permanents (11) sont montés sur un palier à ferrofluide.

4. Dispositif (10) selon la revendication 1,
**caractérisé en ce que**
les aimants permanents (11) sont montés de manière à pouvoir tourner mécaniquement.

5. Dispositif (10) selon l'une des revendications précédentes, **caractérisé en ce que**
les au moins deux aimants permanents (11) sont de conception identique.

6. Dispositif (10) selon l'une des revendications précédentes, **caractérisé en ce que**
le dispositif (10) comprend plus de deux aimants permanents (11), tous les aimants permanents (11) étant disposés les uns à côté des autres dans une première direction spatiale (21).

7. Dispositif (10) selon l'une des revendications précédentes, **caractérisé en ce que**
le dispositif (10) comprend plus de deux aimants permanents (11), les aimants permanents (11) étant disposés selon un agencement bidimensionnel.

8. Dispositif (10) selon l'une des revendications 1, 5, 6 ou 7, **caractérisé en ce que**
au moins deux desdits aimants permanents (11) forment, avec des bobines (14) pouvant être alimentées en courant et deux branches de culasse (15), une unité magnétique (20), les bobines (14) servant à générer localement un champ magnétique et à déplacer les aimants permanents vers une nouvelle position stable,
le dispositif (11) comprenant plus de deux unités magnétiques (20).

9. Dispositif (10) selon la revendication 8,
**caractérisé en ce que**
le dispositif (10) comprend au moins trois unités magnétiques (20) disposées selon un agencement bidimensionnel.

10. Dispositif (10) selon la revendication 8,
**caractérisé en ce que**
le dispositif (10) comprend au moins quatre unités magnétiques (20) disposées selon un agencement tridimensionnel.

11. Procédé (100) de génération et de commande de champs magnétiques, **caractérisé en ce que**
le procédé (100) utilise un dispositif (10) selon l'une des revendications 1 à 10,
le procédé (100) comprenant le déplacement (102) d'au moins l'un d'au moins deux aimants permanents (11) montés de manière mobile vers au moins l'une de deux positions,
chaque aimant permanent (11) générant un champ magnétique partiel, de sorte qu'un des au moins trois états de champ magnétique différents (17) est généré (103) par superposition des champs magnétiques partiels.
